# EUROPEAN PATENT APPLICATION

(11) **EP 1 443 250 A2**
(43) Date of publication of application: **04.08.2004**
(21) Application number: 04002316.0
(22) Date of filing: 03.02.2004
(51) Int. Cl.: F16H 61/28, F16H 59/10

(54) **Automatic transmission apparatus for vehicle**

(30) Priority: 03.02.2003 JP 2003026110
(71) Applicant: Calsonic Kansei Corporation, Tokyo 164-8602 (JP)
(72) Inventor:
(74) Representative: Grünecker, Kinkeldey, Stockmair & Schwanhäusser Anwaltssozietät

(57) **Abstract**

An automatic transmission apparatus for a vehicle is provided with a control inputting apparatus (2) having a select lever (7), a power assisting apparatus (3) adding an assisting force to a control force input to the control inputting apparatus (2) so as to output to the automatic transmission (1), a first cable (4) for transmitting the control force to the power assisting apparatus (3), and a second cable (5) for transmitting an output force of the power assisting apparatus (3) to the automatic transmission (1). Further, the power assisting apparatus (3) is provided with a torque sensor (29) for detecting the control force, a position detecting means for detecting a rotation position of an output shaft (20) outputting an assisting force in addition to the control force to the automatic transmission (1), and a controller (37) for stopping the output shaft at a stop position of the output shaft in correspondence to each of preset range positions of the automatic transmission (1).

## Description

### BACKGROUND OF THE INVENTION

### 1. Field of the Invention

The present invention relates to an automatic transmission apparatus for a vehicle, which reduces a load for changing a range position of the automatic transmission by adding an assisting force to an operating being input to a select lever whereby reduces a load of a passenger.

### 2. Description of the Related Art

Heretofore, there is a technique of reducing an operating force for changing a range position of an automatic transmission in a motor vehicle or the like for assisting an operating force by a passenger (for example, refer to a related invention 1: Japanese Patent Application Laid-Open No. 11-286225).

A manual changing servo assisting apparatus described in the related invention 1 is provided with a shift lever arranged in a steering column of the motor vehicle, a servo actuator for reducing a shift operating force for changing a gear position of an automatic transmission by adding an assisting force to the operating force, and a Bowden cable connecting the shift lever to the servo actuator.

However, in the technique described in the related invention 1, since the Bowden cable connecting the shift lever locating inside a passenger room to the servo actuator locating outside the passenger room is very long, there is a risk that a play is generated in the cable. Owing to this play, there is a risk that a stroke of the shift lever generates an overs and shorts compared with a specified stroke for changing a position of the automatic transmission. For example, in the case that the play of the Bowden cable is very large, there is a case that the position of the automatic transmission is not changed even at a time when the passenger controls the shift lever so as to change the position.

Accordingly, an object of the present invention is to provide an automatic transmission apparatus for a vehicle which can securely change a gear to each of positions of an automatic transmission, even in the case that a play is generated in a Bowden cable for transmitting an operating force being input to a shift lever constituting a control inputting apparatus to a power assisting apparatus.

### SUMMARY OF THE INVENTION

An automatic transmission apparatus according to the present invention has been made in order to solve the above-described problems, and the apparatus comprising: a control inputting apparatus having a select lever for changing a range position of an automatic transmission; a power assisting apparatus adding an assisting force to a control force input to the control inputting apparatus so as to output to the automatic transmission; a first transmitting means for transmitting the control force from the control inputting apparatus to the power assisting apparatus; and a second transmitting means for transmitting an output force from the power assisting apparatus to the automatic transmission, wherein the control inputting apparatus is provided in a vehicle body member near a steering wheel, and the power assisting apparatus is provided in a vehicle body member close to the passenger's foot, whereby the control inputting apparatus and the power assisting apparatus are arranged apart from each other.

### BRIEF DESCRIPTION OF THE DRAWINGS

Fig. 1 is a cross sectional view showing a schematic structure of an automatic transmission apparatus for a vehicle according to the present embodiment;
Fig. 2 is a view showing a power assisting apparatus according to the present invention;
Fig. 3 is a cross sectional view along a line III-III in Fig. 2;
Fig. 4 is a schematic view showing a position detecting means according to an embodiment of the present invention; and
Fig. 5 is an explanatory view of a motion of the automatic transmission apparatus according to the embodiment of the present invention.

### DETAILED DESCRIPTION OF THE INVENTION

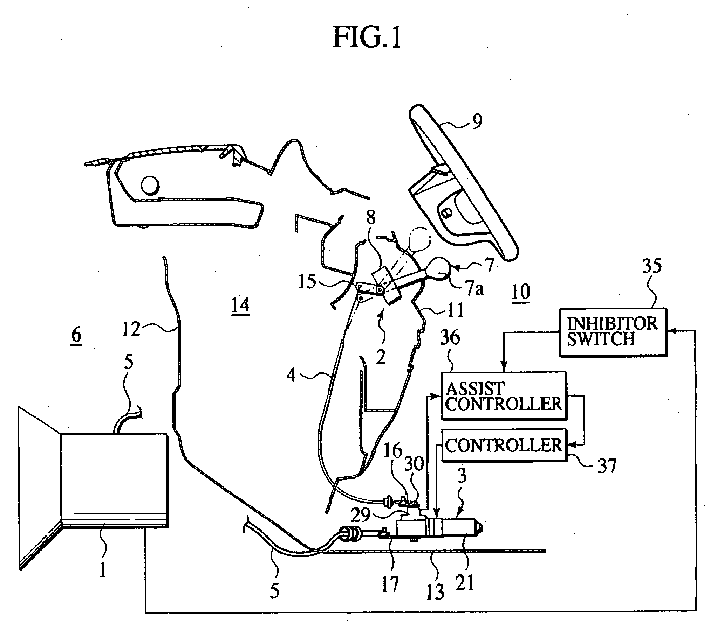

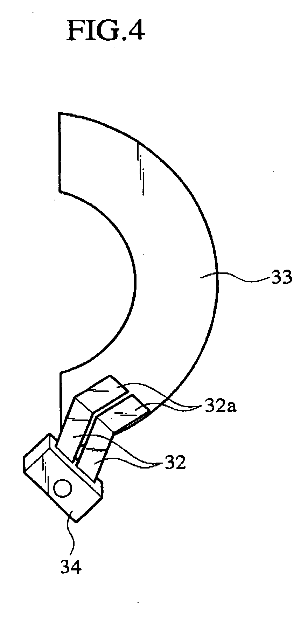

An embodiment of the present invention will hereafter be explained with reference to Figs. 1 to 5.

An automatic transmission apparatus for a vehicle according to the present embodiment is comprised of a control inputting apparatus 2 for changing a range position of an automatic transmission 1 (a transmission), a power assisting apparatus 3 adding an assisting force to an operating force being input to the control inputting apparatus 2 so as to output to the automatic transmission 1, a first cable 4 functioning as a first transmitting means for transmitting the operating force to the power assisting apparatus 3, a second cable 5 functioning as a second transmitting means for transmitting a force obtained by adding the assisting force to the operating force to the automatic transmission 1, an operating force detecting means for detecting the operating force, a position detecting means for detecting a rotational position of an output shaft outputting the assisting force in addition to the operating force to the automatic transmission 1, and a controller for stopping the output shaft at a stop position of the output shaft in correspondence to each of preset range positions of the automatic transmission 1, as shown in Fig. 1.

With reference to Fig.1, the automatic transmission 1 controls the control inputting apparatus 2 mentioned below and actuates a manual valve (not shown) within a control valve unit (not shown) so as to change a hydraulic pressure with respect to a selected range position. The automatic transmission 1 is arranged within an engine room 6.

With reference to Fig. 1, the control inputting apparatus 2 comprises a select lever 7 and a lever box 8 supporting the select lever 7, and is configured to change a range position, such as a P range (Parking), an R range (Reverse), an N range (Neutral), a D range (Drive), an L range (Low) of the automatic transmission 1 by controlling the select lever 7.

The select lever 7 comprises a lever knob 7a and the lever knob 7a is arranged within a passenger room 10 in which a steering wheel 9 and the like are provided. A driver, for example, slides the select lever 7 in a longitudinal direction, whereby each of the range positions of the automatic transmission 1 is determined. The lever box 8 is provided within an instrument panel chamber 14 which is defined by an instrument panel 11, a dash panel 12 and a floor panel 13. The passenger room 10 and the engine room 6 are defined by the instrument panel 11, the dash panel 12 and the floor panel 13.

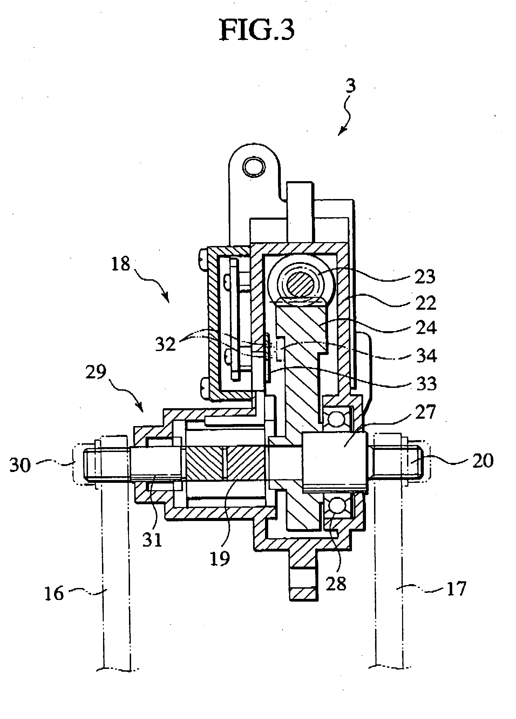

With reference to Fig.3, the first cable 4 transmits the operating force generated at a time when the driver operates the select lever 7 to the power assisting apparatus 3. The first cable 4 is structured such that one end is fixed to a lever side arm 15 provided in the lever box 8 and another end is fixed to an input side arm 16 provided in the power assisting apparatus 3, thereby transmitting the operating force generated by controlling the select lever 7 to the power assisting apparatus 3. Most part of the first cable 4 is arranged within the instrument panel chamber 14.

As shown in Fig. 1, one end of the second cable 5 is fixed to an output side arm 17 of the power assisting apparatus 3, and another end of the second cable 5 is fixed to a control arm (not shown) of the manual valve of the automatic transmission 1, thereby transmitting the output obtained by adding the assisting force to the operating force to the automatic transmission 1.

As shown in Fig. 1, the power assisting apparatus 3 is fixed to the floor panel 13 being located in the vicinity of the foot of the passenger. The power assisting apparatus 3 corresponds to an apparatus for controlling the select lever 7 and adding the assisting force to the operating force generated in the control inputting apparatus 2 so as to output to the automatic transmission 1.

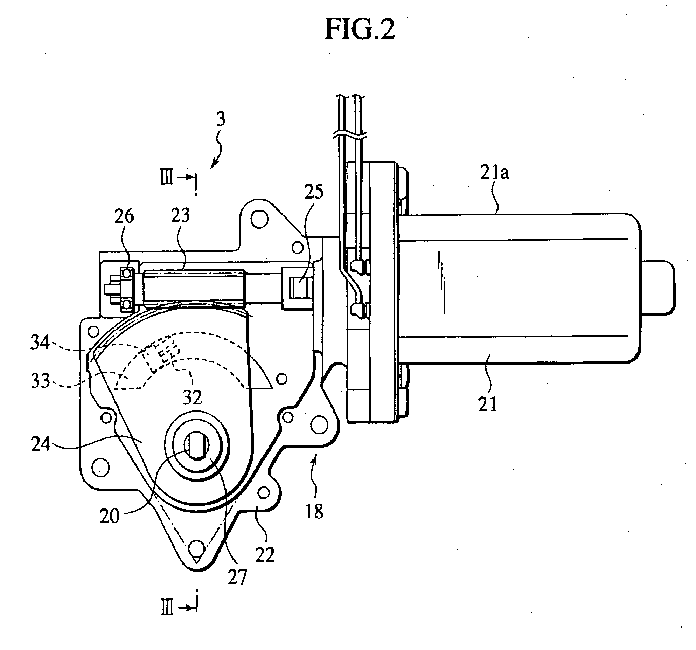

As shown in Figs. 2 and 3, the power assisting apparatus 3 has an assisting force generating portion 18 for generating the assisting force, an input shaft 19 for inputting the operating force transmitted by the first cable 4, and an output shaft 20 for outputting the force obtained by adding the assisting force to the operating force.

The assisting force generating portion 18 is comprised of an electric motor 21, a worm gear 23 fixed to a drive shaft 25 of the electric motor 21 received within a case housing 22 formed by an aluminum die casting or the like, and a worm wheel gear 24 functioning as an output gear engaging with the worm gear 23.

The drive shaft 25 of the electric motor 21 protrudes into the case housing 22 from a side surface of the electric motor 21. Further, a main body portion 21a of the electric motor 21 is fixed to an outer side of the case housing 22. The worm gear 23 is supported to a bearing 26 provided within the case housing 22, and rotates together with the drive shaft 25 of the electric motor 21. The worm wheel gear 24 is formed in a fan shape, and engages with the worm gear 23 so as to reduce a rotational speed of the electric motor 21. The worm gear 24 is configured to swing within a predetermined angle range.

The input shaft 19 and the output shaft 20 are formed as input and output shafts having a coaxial structure, and an axial center portion 27 thereof is rotatably supported by a bearing 28 provided within the case housing 22. The input shaft 19 is provided within the case housing 22, however, the output shaft 20 is provided so as to protrude to an outer side of the case housing 22. The worm gear 24 mentioned above is pressed into the axial center potion 27 of the input shaft 19 and the output shaft 20 having the coaxial structure. Accordingly, when the worm wheel gear 24 rotates, the output shaft 20 also rotates.

A torque sensor 29 corresponding to the operating force detecting means detects the operating force transmitted by the first cable 4 as a rotational torque. The torque sensor 29 has a rotation shaft 31 fixed to the input side arm 16 by a screw 30, as shown in Fig. 3, and outputs a rotational torque of the rotation shaft 31 as a control torque signal. Further, the rotation shaft 31 is pressed into the input shaft 19 and the output shaft 20 formed as the input and output integral shaft so as to be integrally formed.

With reference to Figs. 2 to 4, the position detecting means is comprised of a detector 32 for detecting a rotational position of the output shaft 20, and a resistance substrate 33 for slidably contacting a contact point 32a of the detector 32.

The detector 32 is constituted by a conductive metal plate having a contact point 32a in a leading end portion, and has a mounting portion 34 which is integrally formed by an insulative material in a base end portion. The detector 32 is mounted by fixing the mounting portion 34 to one main surface of the worm wheel gear 24. The detector 32 is structured such that the contact point 32a in the leading end thereof is folded in a direction of moving apart from the worm wheel gear 24, and is not brought into contact with the worm wheel gear 24. Further, the detector 32 is fixed to the worm wheel gear 24 via the mounting portion 34 formed by the insulative material so as to be prevented from being conductive with the worm wheel gear 24, whereby an insulating property is secured.

The resistance substrate 33 is formed as a circular arc conductor layer in correspondence to a moving locus of the contact point 32a of the detector 32 fixed to the worm wheel gear 24, and is provided in an inner surface of the case housing 22 opposing to the detector 32. The structure is made such that the contact point 32a of the detector 32 is slidably contacted with the resistance substrate 33, whereby a resistance value detected by the detector 32 changes, and the rotational position of the output shaft 20 rotating integrally with the worm wheel gear 24 can be detected based on the change of resistance value.

The controller 37 functioning as the control means executes a control of stopping the output shaft 20 at the stopping position of the output shaft 20 in correspondence to each of the preset range positions of the automatic transmission 1. As shown in Fig. 1, the control torque signal from the torque sensor 29 and a range signal from an inhibitor switch 35 are input to an assist controller 36, and an assisting force is computed by the assist controller 36. A signal including information such as the computed assisting force and the like is input to the controller 37 by the assist controller 36.

The inhibitor switch 35 is provided in the automatic transmission 1, detects a selected range position and outputs a range position signal. The assist controller 36 starts operation based on generation of an ignition power source, inputs the control torque signal from the torque sensor 29 and the range position signal from the inhibitor switch 35, computes a target assisting force based on the input information, and outputs a command for obtaining the target assisting force to the electric motor 21.

The controller 37 corresponding to the control means previously sets a stop position of the output shaft 20 on the assumption that the automatic transmission 1 is at a position where the automatic transmission 1 is securely changed to each of the range position, with taking into consideration a play of the stroke between the first cable 4 and the second cable 5, and controls the electric motor 21 such that the output shaft 20 stops at the preset stop position in the case that the output shaft 20 does not rotate to a proper position due to a lack of stroke, or in the case that the output shaft 20 rotates so as to pass through the proper position.

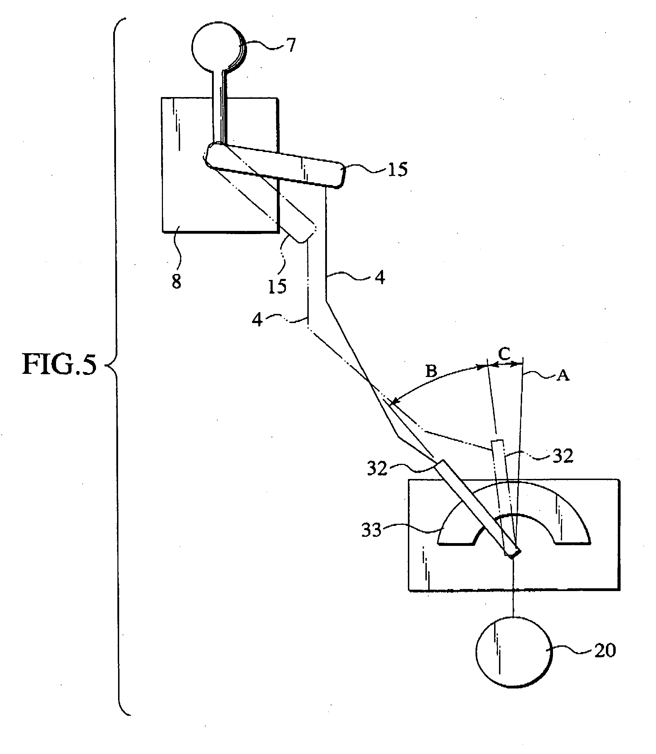

As shown in Fig. 5, in the case that when moving the select lever 7 from a P position to an R position, the detector 32 and the resistance substrate 33 corresponding to the position detecting means detect that the output shaft 20 stops short of a preset stop position (a position shown by a line A in Fig. 5) due to the play caused by the deflection of the first cable 4 or the like, a stroke (a range shown by an arrow B in Fig. 5) moved by the control inputting apparatus 2 comes short of the required stroke for the properly changed position. Accordingly, the controller 37 controls the driving of the electric motor 21 so as to rotate the output shaft 20 to the preset stop position. Accordingly, the output shaft 20 is rotated at an amount of a corrected value (a range shown by an arrow C in Fig. 5) calculated by the position detection. According to the motions mentioned above, it is possible to securely stop at the position where the position of the automatic transmission 1 is changed.

In the automatic transmission apparatus for the vehicle according to the present embodiment having the structure mentioned above, since the control inputting apparatus 2 is provided in the instrument panel 11 and the power assisting apparatus 3 is provided in the floor panel 13, it is possible to reduce a noise generated at a time of driving the power assisting apparatus 3, and it is possible to improve a freedom of doing the layout of the inner portion of the passenger room 10.

In the case of integrally forming the control inputting apparatus and the power assisting apparatus, the electric motor is formed in a protruding shape by arranging these apparatuses within the instrument panel chamber. Accordingly, since the freedom of doing the layout is reduced, and the electric motor is arranged near ears of the passenger, an operation sound falls on the passenger's ears. However, in the case that the control inputting apparatus 2 and the power assisting apparatus 3 are arranged separately and the power assisting apparatus 3 generating a loud operation sound is particularly arranged on the floor panel 13 close to the passenger's feet, as in the present embodiment, it is possible to further reduce the noise.

Further, in the automatic transmission apparatus for the vehicle according to the present embodiment, since the rotation shaft 31 of the torque sensor 29 is integrally structured on the same axis of the output shaft 20 of the power assisting apparatus 3, no play is generated between the output shaft 20 and the rotation shaft 31 of the torque sensor 29. Accordingly, it is possible to detect accurately. Further, since the torque sensor 29 outputs a detection value by an extremely low power electric current, a noise is added to the detection value, the motor power does not carry out an accurate operation and the operating force is large, in the case that the control inputting apparatus 2 has the torque sensor 29 built-in. However, in the present embodiment, since the case housing 22 is formed by the aluminum die casting, the case housing 22 is hard to be exposed to a radio faulty such as a radio noise or the like and it is possible to prevent a malfunction.

Before describing the operation of the automatic transmission apparatus for the vehicle mentioned above, a description will be briefly given of a reason why the position of the automatic transmission 1 is not changed due to the generation of the play in the first cable 4 and the second cable 5.

When arranging the power assisting apparatus 3 on the floor panel 13, a play (hereinafter, refer to a play 1) in stroke is generated in the first cable 4 provided between the control inputting apparatus 2 and the power assisting apparatus 3, due to a long entire length. In the same manner, a play (hereinafter, refer to a play 2) is generated between the power assisting apparatus 3 and the automatic transmission 1. Further, since a locus is different between the first cable 4 and the second cable 5, a generating way of the play is different.

In the case that the control inputting apparatus 2 has the torque sensor 29 corresponding to the means for detecting the operating force built-in, the torque sensor 29 detects a torque 0 so as to stop the power, at a time when the stroke of the select lever 7 is completed. In the operation at the position where the play 2 is larger than the play 1, a lack of stroke is generated, and the position of the automatic transmission 1 is not changed.

Next, a description will be given of an operation of the automatic transmission for the vehicle according to the present embodiment. In the present embodiment, when sliding the select lever 7 from the position P to the position R, the operating force generated in the control inputting apparatus 2 is detected by the torque sensor 29 via the first cable 4. The detected torque signal is transferred to the assist controller 36. The assist controller 36 computes the assisting force based on the torque signal and the range position signal transmitted from the inhibitor switch 35, and commands the controller 37 such that the torque obtained by adding the assisting force to the operating force is output to the electric motor 21.

The controller 37 rotates the drive shaft 25 based on the command. Accordingly, the worm gear 23 fixed to the drive shaft 25 rotates, and turns the worm wheel gear 24 engaged with the worm gear 23. When the worm wheel gear 24 rotates, the output shaft 20 fixed to the rotation axis of the worm wheel gear 24 rotates. The contact point 32a of the detector 32 fixed to the worm wheel gear 24 is brought into slidable contact with the resistance substrate 33 provided in the inner surface of the case housing 22, whereby a rotational position of the output shaft 20 is always detected by a position detecting means for detecting the rotational position of the output shaft 20.

In this case, even when some overs and shorts is generated in the stroke due to the play 1 of the first cable 4, the controller 37 actuates the electric motor 21 until the output shaft 20 reaches the position corresponding to the preset stop position even in the case that the detected operation torque is 0, thereby rotating the output shaft 20. In this case, the controller 37 actuates the electric motor 21 such that the output shaft 20 rotates up to the preset stop position including both of the case that the output shaft 20 does not rotate up to the preset stop position and the case that the output shaft 20 runs over the stop position. At this time, since the rotational position of the output shaft 20 is always detected by the position detecting means, the output shaft 20 securely stops at the stop position mentioned above. As mentioned above, even in the case that the first cable 4 has the play 1, the position of the automatic transmission 1 is securely changed to the position R.

The entire content of a Japanese Application No. P2003-0261100 with a filing date of February 3, 2003 is herein incorporated by reference.

Although the invention has been described above by reference to certain embodiments of the present invention, the invention is not limited to the embodiments described above and will occur to those skilled in the art, in light of the teachings. The scope of the invention is defined with reference to the following claims.

## Claims

1. An automatic transmission apparatus for a vehicle comprising:
an operating inputting apparatus (2) having a select lever (7) for changing a range position of an automatic transmission (1);
a power assisting apparatus (3) adding an assisting force to an operating force input to the operating inputting apparatus (2) so as to output to the automatic transmission (1);
a first transmitting means (4) for transmitting the operating force from the operating inputting apparatus (2) to the power assisting apparatus (3); and
a second transmitting means (5) for transmitting an output force from the power assisting apparatus (3) to the automatic transmission (1),
wherein the operating inputting apparatus (2) is provided in a vehicle body member near a steering wheel, and the power assisting apparatus (3) is provided in a vehicle body member in the vicinity of the passenger's foot, and
wherein the operating inputting apparatus (2) and the power assisting apparatus (3) are arranged apart from one another.

2. The automatic transmission apparatus for a vehicle according to claim 1, wherein the power assisting apparatus (3) is provided with an operating force detecting means (29) for detecting an operating force input to the operating inputting apparatus (2), a position detecting means (32, 33) for detecting a rotation position of an output shaft (20) outputting an assisting force in addition to the operation force to the automatic transmission (1), and a controller (37) for stopping the output shaft (20) at a stop position of the output shaft (20) in correspondence to each of preset range positions of the automatic transmission (1).

3. The automatic transmission apparatus for a vehicle according to claim 1 or 2, wherein the operating force detecting means (29) has a rotation shaft (31) detecting the operating force transmitted by the first transmitting means (4) as a rotational torque, and the output shaft (20) is arranged on the same axis as the rotation shaft (31).

4. The automatic transmission apparatus for a vehicle according to claims 1 to 3, wherein the position detecting means (32, 33) is provided with a detector (32) fixed to an output gear (24) mounted to the output shaft (20), and a resistance substrate (33) with which a contact point (32a) of the detector (32) is brought into slidable contact, and a mounting portion (34) of the detector (32) mounted to the output gear (24) is integrally formed by an insulative material.

5. The automatic transmission apparatus for a vehicle according to claims 1 to 4, wherein the operating inputting apparatus (2) is provided in an instrument panel (11), and the power assisting apparatus (3) is provided in a dash panel (12) or a floor panel (13).
